# EUROPEAN PATENT APPLICATION

(11) **EP 4 398 388 A1**
(43) Date of publication of application: **10.07.2024**
(21) Application number: 22942484.1
(22) Date of filing: 08.12.2022
(51) Int. Cl.: H01M 50/147

(54) **END COVER, BATTERY CELL, BATTERY AND ELECTRIC DEVICE**

(30) Priority: 16.05.2022 WO PCT/CN2022/093132
(71) Applicant: Contemporary Amperex Technology Co., Limited, Ningde City, Fujian 352100 (CN)
(72) Inventor: ZHOU, Wenlin, Ningde City, Fujian 352100 (CN); XU, Liangfan, Ningde City, Fujian 352100 (CN); LI, Quankun, Ningde City, Fujian 352100 (CN); WANG, Peng, Ningde City, Fujian 352100 (CN)
(74) Representative: Laufhütte, Dieter
(86) International application number: PCT/CN2022/137556
(87) International publication number: WO 2023/221464

(57) **Abstract**

Some embodiments of this application provide an end cap, a battery cell, a battery, and an electrical device, and relate to the technical field of batteries. The end cap includes a cap body and a groove. The cap body contains a first surface. The groove is created on the cap body to form a pressure relief region at a position of the groove on the cap body. The groove is recessed from the first surface along a thickness direction of the cap body. Lateral faces of the groove include a corner face located at a corner position of the groove. The corner face is connected to the first surface by a first chamfered face. The first chamfered face reduces the strength of the pressure relief region at the corner position of the groove, equalizes the strength of the pressure relief region at the corner and edge positions of the groove, reduces the risk of local stress concentration in the pressure relief region, well protects the pressure relief region, and improves the impact resistance of the end cap.

## Description

### CROSS-REFERENCE TO RELATED APPLICATIONS

This application claims priority to International Patent Application No. PCT/CN2022/093132, filed on May 16, 2022 and entitled "END CAP, BATTERY CELL, BATTERY, AND ELECTRICAL DEVICE", which is incorporated herein by reference in its entirety.

### TECHNICAL FIELD

This application relates to the technical field of batteries, and in particular, to an end cap, a battery cell, a battery, and an electrical device.

### BACKGROUND

With the development of new energy technology, batteries are widely applied in more fields such as mobile phones, notebook computers, electric power carts, electric vehicles, electric airplanes, electric ships, electric toy cars, electric toy ships, electric toy airplanes, and electric tools.

In the battery technology, not only the safety of a battery cell but also the service life of the battery cell needs to be considered. The impact resistance of an end cap directly affects the service life of the battery cell. Therefore, how to improve the impact resistance of the end cap is an urgent problem in the battery technology.

### SUMMARY

Some embodiments of this application provide an end cap, a battery cell, a battery, and an electrical device to effectively improve the impact resistance of the end cap.

According to a first aspect, an embodiment of this application provides an end cap, including a cap body and a groove. The cap body contains a first surface. The groove is created on the cap body to form a pressure relief region at a position of the groove on the cap body. The groove is recessed from the first surface along a thickness direction of the cap body. Lateral faces of the groove include a corner face located at a corner position of the groove. The corner face is connected to the first surface by a first chamfered face.

In the above technical solution, the corner face is connected to the first surface by the first chamfered face. The first chamfered face reduces the strength of the pressure relief region at the corner position of the groove, equalizes the strength of the pressure relief region at the corner and edge positions of the groove, reduces the risk of local stress concentration in the pressure relief region, well protects the pressure relief region, and improves the impact resistance of the end cap.

In some embodiments, a radius of the first chamfered face increases progressively from both ends to a middle position along a circumferential direction of the groove. This structure makes the strength of the pressure relief region at the corner position of the groove increase progressively from the middle to both ends of the first chamfered face.

In some embodiments, a maximum radius of the first chamfered face is R₁, satisfying: 0.5 mm ≤ R₁ ≤ 2 mm.

In some embodiments, the lateral faces of the groove further include a first lateral face connected to the corner face. The first lateral face is connected to the first surface by a second chamfered face. A maximum radius of the second chamfered face is less than a maximum radius of the first chamfered face. The second chamfered face enables the first lateral face to transition to the first surface in a more rounded manner, thereby avoiding formation of a sharp corner caused by direct connection between the first lateral face and the first surface. With the maximum radius of the second chamfered face being less than the maximum radius of the first chamfered face, the strength of the pressure relief region is equalized at the corner and edge positions of the groove.

In some embodiments, along a circumferential direction of the groove, each of two ends of the second chamfered face is connected to a first chamfered face. A radius of the second chamfered face decreases progressively from both ends to a middle position. This structure makes the strength of the pressure relief region at the edge positions of the groove increase progressively from both ends to the middle position of the second chamfered face, thereby increasing the strength of the pressure relief region at the middle position of the edge of the groove, and achieving a higher impact resistance.

In some embodiments, the first chamfered face is connected to the second chamfered face at a first connection position. The radius of the first chamfered face at the first connection position is equal to a radius of the second chamfered face at the first connection position. This structure enables the first chamfered face to transition to the second chamfered face more smoothly, and enables the first chamfered face and the second chamfered face to form a continuous chamfered face.

In some embodiments, the maximum radius of the second chamfered face is R₂, satisfying: 0.1 mm ≤ R₂ ≤ 0.5 mm.

In some embodiments, the lateral faces of the groove further include a second lateral face. The second lateral face and the first lateral face are located in different orientations of the groove. The second lateral face is connected to the first lateral face by the corner face. The second lateral face is connected to the first surface by a third chamfered face. A maximum radius of the third chamfered face is less than a maximum radius of the first chamfered face. The third chamfered face enables the second lateral face to transition to the first surface in a more rounded manner, thereby avoiding formation of a sharp corner caused by direct connection between the second lateral face and the first surface. With the maximum radius of the third chamfered face being less than the maximum radius of the first chamfered face, the strength of the pressure relief region is equalized at the corner and edge positions of the groove.

In some embodiments, along a circumferential direction of the groove, each of two ends of the third chamfered face is connected to a first chamfered face, and a radius of the third chamfered face decreases progressively from both ends to a middle position. This structure makes the strength of the pressure relief region at the edge positions of the groove increase progressively from both ends to the middle position of the third chamfered face, thereby increasing the strength of the pressure relief region at the middle position of the edge of the groove, and achieving a higher impact resistance.

In some embodiments, the first chamfered face is connected to the third chamfered face at a second connection position. The radius of the first chamfered face at the second connection position is equal to a radius of the third chamfered face at the second connection position. This structure enables the first chamfered face to transition to the third chamfered face more smoothly, and enables the first chamfered face and the third chamfered face to form a continuous chamfered face.

In some embodiments, the maximum radius of the third chamfered face is R₃, satisfying: 0.1 mm ≤ R₃ ≤ 0.5 mm.

In some embodiments, the lateral faces of the groove include two first lateral faces and two second lateral faces. The two first lateral faces are disposed opposite to each other along a first direction. The two second lateral faces are disposed opposite to each other along a second direction. The first direction is perpendicular to the second direction. In this way, the two first lateral faces and the two second lateral faces are located in different orientations, so that the groove is a rectangular groove with a roughly rectangular cross-section. The groove is simple in structure and easy to mold.

In some embodiments, a distance between the two first lateral faces along the first direction is a first distance. A distance between the two second lateral faces along the second direction is a second distance. The first distance is less than the second distance. In this way, the groove is a rectangular groove with a roughly rectangular cross-section, and the pressure relief region is also roughly rectangular, thereby providing a relatively large pressure relief area.

In some embodiments, the first direction is a length direction of the cap body, and the second direction is a width direction of the cap body. When an inner side of the end cap undergoes a pressure from inside the battery cell, the pressure relief region is more prone to be broken at a short-edge position of the groove. When the outer side of the end cap undergoes an impact force, the pressure relief region is more prone to be broken at a long-edge position of the groove, thereby varying the positions prone to break in the pressure relief region under two types of different working conditions, increasing the impact resistance of the end cap, and improving the service life of the battery cell.

In some embodiments, a pressure relief nick is created on the cap body. The pressure relief nick is located in the pressure relief region. The region at which the pressure relief nick is located on the cap body is more fragile. In this way, when the pressure in the battery cell reaches a burst pressure, the pressure relief region bursts open at the position of the pressure relief nick, so as to relieve pressure from the pressure relief region.

In some embodiments, the pressure relief nick is a groove extending along a closed track with a start point connected to an ending point. With this structure, when the pressure inside the battery cell reaches the burst pressure, the pressure relief region can burst open at the region defined by the pressure relief nick, thereby providing a relatively large pressure relief area, and improving the pressure relief efficiency.

In some embodiments, the end cap further includes a protection piece. The protection piece is connected to the cap body and covers the groove. The protection piece covers the groove. The protection piece protects the pressure relief region, and reduces the risk of damage to the pressure relief region caused by a foreign object.

In some embodiments, the protection piece is connected to the first surface. With this structure, on the one hand, it is more convenient to mount the protection piece. On the other hand, the protection piece can cover each chamfered face, thereby being more protective for the pressure relief region.

In some embodiments, an exhaust passage is created on the cap body. The exhaust passage communicates an interior of the groove to an exterior of the cap body. The exhaust passage implements communication between the interior of the groove and the outside, so as to equalize the air pressure between the interior of the groove and the outside, and reduce the risk of detachment of the protection piece caused by an increased air pressure inside the groove.

In some embodiments, the exhaust passage is an exhaust slot created on the cap body. One end of the exhaust slot extends to the first surface. This structure of the exhaust passage can effectively communicate the interior of the groove to the outside, and is easy to mold.

According to a second aspect, an embodiment of this application provides a battery cell. The battery cell includes a housing and the end cap provided in any one of the embodiments of the first aspect. An opening is created on the housing. The cap body seals the opening.

According to a third aspect, an embodiment of this application provides a battery, including the battery cell provided in any one of the embodiments of the second aspect.

In some embodiments, the battery further includes a box. The battery cell is accommodated in the box. The box includes a bottom wall. The end cap is disposed on a side of the battery cell, the side being opposite to the bottom wall.

According to a fourth aspect, an embodiment of this application further provides an electrical device. The electrical device includes the battery provided in any one of the embodiments of the third aspect.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic structural diagram of an end cap according to some embodiments of this application;
FIG. 5 is a close-up view of a position A on the end cap shown in FIG. 4;
FIG. 6 is a schematic structural diagram of an end cap according to some other embodiments of this application;
FIG. 7 is a close-up view of a position B on the end cap shown in FIG. 6;
FIG. 8 is a local view of an end cap (without forming a chamfered face) according to some embodiments of this application;
FIG. 9 is a top view of the end cap shown in FIG. 6;
FIG. 10 is a cross-sectional view of the end cap shown in FIG. 9 sectioned along a C-C line;
FIG. 11 is a cross-sectional view of the end cap shown in FIG. 9 sectioned along a D-D line;
FIG. 12 is a close-up view of a position F on the end cap shown in FIG. 11;
FIG. 13 is a cross-sectional view of the end cap shown in FIG. 9 sectioned along an E-E line;
FIG. 14 is a close-up view of a position G on the end cap shown in FIG. 13;
FIG. 15 is a schematic structural diagram of an end cap according to some other embodiments of this application;
FIG. 16 is an exploded view of the end cap shown in FIG. 15; and
FIG. 17 is a close-up view of the end cap shown in FIG. 15 stripped of a protection piece.

List of reference numerals: 1-housing; 2-electrode assembly; 21-positive tab; 22-negative tab; 3-end cap; 31-cap body; 311-boss; 3111-first surface; 312-pressure relief region; 313-pressure relief nick; 314-exhaust passage; 32-groove; 321-corner face; 322-first chamfered face; 323-first lateral face; 324-second chamfered face; 325-second lateral face; 326-third chamfered face; 33-protection piece; 4-electrode terminal; 4a-positive electrode terminal; 4b-negative electrode terminal; 5-current collection component; 10-battery cell; 20-box; 201-first part; 202-second part; 100-battery; 200-controller; 300-motor; 1000-vehicle; a-first connection position; b-second connection position; W-extension direction of a corner face; X-first direction; Y-second direction; Z-thickness direction.

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application. All other embodiments derived by a person of ordinary skill in the art based on the embodiments of this application without making any creative efforts still fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

"A plurality of" referred to in this application means two or more (including two).

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The embodiments of this application do not limit the shape of the battery cell. In terms of the packaging form, the battery cell is typically classed into three types: cylindrical battery cell, prismatic battery cell, and pouch-type battery cell. The type of the battery cell is not limited herein.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly and an electrolyte solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the negative current collector, a part uncoated with the negative active material layer protrudes from a part coated with the negative active material layer, and the part uncoated with the negative active material layer serves as a negative tab. The negative current collector may be made of copper, and a negative active material may be carbon, silicon, or the like. To prevent a large electrical current from tripping the circuit, a plurality of positive tabs are stacked together, and a plurality of negative tabs are stacked together. The separator may be made of a material such as PP (polypropylene, polypropylene) or PE (polyethylene, polyethylene). In addition, the electrode assembly may be of a jelly-roll type structure or a stacked type structure, without being limited herein.

The development of the battery technology needs to allow for a plurality of design factors, including performance parameters such as energy density, cycle life, discharge capacity, charge rate, and discharge rate, and also needs to ensure safety of the battery.

For the battery cell, to ensure safety, a pressure relief structure may be disposed on an end cap of the battery cell. For example, a groove is created on the end cap so that the end cap is relatively fragile at the position of the groove so as to form a pressure relief region. When the battery cell is thermally runaway, the pressure inside the battery cell can be relieved through the pressure relief region to reduce the risk of explosion and fire of the battery cell and improve the safety of the battery cell.

The inventor has noticed that, when a battery cell is in practical use, a pressure relief region of an end cap is prone to burst open abnormally without thermal runaway of the battery cell, thereby impairing the service life of the battery cell.

Through research, the inventor finds that, for the end cap, the strength of the pressure relief region at an edge position of the groove is less than the strength of the pressure relief region at a corner position of the groove. When the end cap is subjected to an impact force, because the strength of the pressure relief region is relatively low at the edge position of the groove, the stress is concentrated at the edge position of the groove. Consequently, deformation at the edge position of the groove is relatively large, and deformation at the corner position of the groove is relatively small, thereby making the pressure relief region burst open abnormally, and impairing the service life of the battery cell.

In view of this, an embodiment of this application provides an end cap. The end cap includes a cap body and a groove. The cap body contains a first surface. The groove is created on the cap body to form a pressure relief region at a position of the groove on the cap body. The groove is recessed from the first surface along a thickness direction of the cap body. Lateral faces of the groove include a corner face located at a corner position of the groove. The corner face is connected to the first surface by a first chamfered face.

In such an end cap, the corner face is connected to the first surface by the first chamfered face. The first chamfered face reduces the strength of the pressure relief region at the corner position of the groove, and equalizes the strength of the pressure relief region at the corner and edge positions of the groove. When the end cap is subjected to an impact force, the difference between the amount of deformation of the pressure relief region at the edge position of the groove and the amount of deformation of the pressure relief region at the corner position of the groove is not excessive, thereby reducing the risk of local stress concentration in the pressure relief region, well protecting the pressure relief region, and improving the impact resistance of the end cap.

The technical solutions described in this embodiment of this application are applicable to a battery and an electrical device that uses the battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle is used as an example of the electrical device.

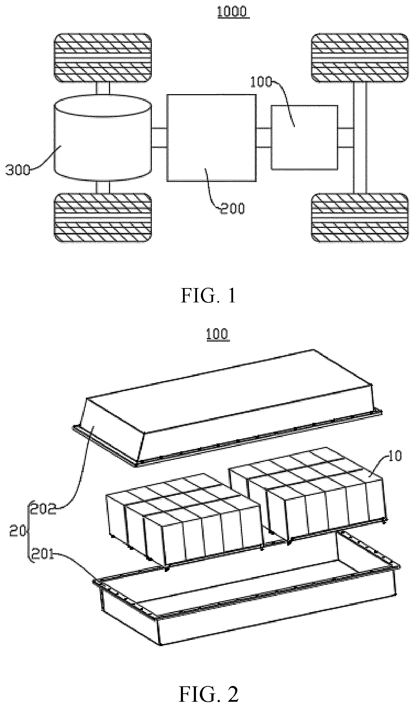

Referring to FIG. 1, FIG. 1 is a schematic structural diagram of a vehicle 1000 according to some embodiments of this application. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000.

The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

Referring to FIG. 2, FIG. 2 is an exploded view of a battery 100 according to some embodiments of this application. The battery 100 includes a battery cell 10 and a box 20. The box 20 is configured to accommodate the battery cell 10.

The box 20 is a component configured to accommodate the battery cell 10. The box 20 provides an accommodation space for the battery cell 10. The box 20 may be in various structures. In some embodiments, the box 20 may include a first part 201 and a second part 202. The first part 201 and the second part 202 fit and cover each other to define the accommodation space configured to accommodate the battery cell 10. The first part 201 and the second part 202 may be in various shapes, such as a cuboid or cylinder. The first part 201 may be a hollow structure opened up at one side. The second part 202 may also be a hollow structure opened up at one side. The open-up side of the second part 202 fits and covers the open-up side of the first part 201 to form the box 20 that provides the accommodation space. Alternatively, the first part 201 is a hollow structure opened up at one side, and the second part 202 assumes a plate-shaped structure. The second part 202 fits and covers the open-up side of the first part 201 to form the box 20 that provides the accommodation space. Airtightness may be implemented between the first part 201 and the second part 202 by a sealing element. The sealing element may be a sealing ring, a sealant, or the like.

There may be one or more battery cells 10 in the battery 100. If there are a plurality of battery cells 10, the plurality of battery cells 10 may be connected in series, parallel, or series-and-parallel pattern. The series-and-parallel pattern means a combination of series connection and parallel connection of the plurality of battery cells 10. The plurality of battery cells 10 are connected in series, parallel, or series-and-parallel pattern to form a battery module first, and then a plurality of battery modules are connected in series, parallel, or series-and-parallel pattern to form an entirety that is to be accommodated in the box 20. Alternatively, all battery cells 10 are directly connected in series, parallel, or series-and-parallel pattern, and then the entirety of all battery cells 10 is accommodated in the box 20.

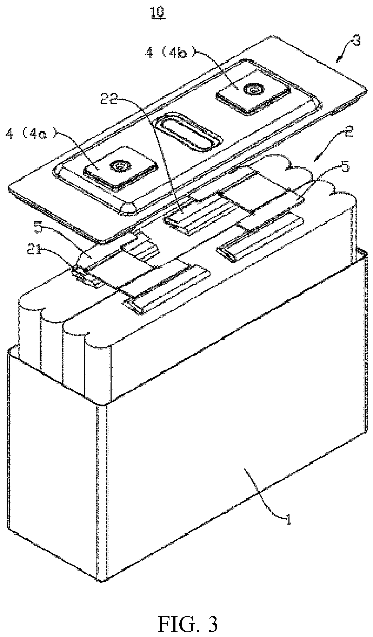

Referring to FIG. 3, FIG. 3 is an exploded view of a battery cell 10 according to some embodiments of this application. The battery cell 10 includes a housing 1, an electrode assembly 2, an end cap 3, an electrode terminal 4, and a current collection component 5.

The housing 1 is a component configured to accommodate the electrode assembly 2. The housing 1 may be a hollow structure opened at one end, or, the housing 1 may be a hollow structure opened at two opposite ends. The housing 1 may be in various shapes such as a cylinder or cuboid. The housing 1 may be made of a variety of materials such as copper, iron, aluminum, steel, or an aluminum alloy.

The electrode assembly 2 is a component that reacts electrochemically in the battery cell 10. The electrode assembly 2 may include a positive electrode plate, a negative electrode plate, and a separator. The electrode assembly 2 may be a jelly-roll structure formed by winding the positive electrode plate, the separator, and the negative electrode plate, or a stacked structure formed by stacking the positive electrode plate, the separator, and the negative electrode plate. The electrode assembly 2 includes a positive tab 21 and a negative tab 22. The positive tab 21 may be a part uncoated with the positive active material layer in the positive electrode plate, and the negative tab 22 may be a part uncoated with the negative active material layer in the negative electrode plate.

The end cap 3 is a component that seals the opening of the housing 1 to isolate the internal environment of the battery cell 10 from the external environment. The end cap 3 and the housing 1 jointly define an airtight space configured to accommodate the electrode assembly 2, an electrolytic solution, and other components. The shape of the end cap 3 may fit the shape of the housing 1. For example, the housing 1 is a cuboidal structure, and the end cap 3 is a rectangular structure that fits the housing 1. The end cap 3 may be made of a variety of materials such as copper, iron, aluminum, steel, or an aluminum alloy. The end cap 3 may be fixed to the housing 1 by welding.

There may be one or two end caps 3 in a battery cell 10. If the housing 1 is a hollow structure opened at one end, one end cap 3 may be disposed. If the housing 1 is a hollow structure opened at both ends, two end caps 3 may be disposed. The two end caps 3 seal the two openings of the housing 1 respectively.

The electrode terminal 4 is a component connected to other components to output electrical energy of the battery cell 10 in the battery cell 10. The electrode terminal 4 is disposed on the end cap 3. The electrode terminal 4 is configured to be electrically connected to the positive tab 21 or negative tab 22 of the electrode assembly 2. In the battery cell 10, two electrode terminals 4 may be disposed. The two electrode terminals 4 are a positive electrode terminal 4a and a negative electrode terminal 4b respectively. The positive electrode terminal 4a is configured to be electrically connected to the positive tab 21, and the negative electrode terminal 4b is configured to be electrically connected to the negative tab 22. In an embodiment in which there are two end caps 3 in a battery cell 10, the positive electrode terminal 4a and the negative electrode terminal 4b may be disposed on the same end cap 3, or, the positive electrode terminal 4a and the negative electrode terminal 4b may be disposed on the two end caps 3 respectively. As shown in FIG. 3, in an embodiment in which there is one end cap 3 in a battery cell 10, the positive electrode terminal 4a and the negative electrode terminal 4b may be disposed on the same end cap 3.

The current collection component 5 is a component configured to implement electrical connection between the tab and the electrode terminal 4. In the embodiment shown in FIG. 3, both the positive electrode terminal 4a and the negative electrode terminal 4b are disposed on the end cap 3. The positive electrode terminal 4a may be connected to the positive tab 21 by one current collection component 5, and the negative electrode terminal 4b may be connected to the negative tab 22 by another current collection component 5.

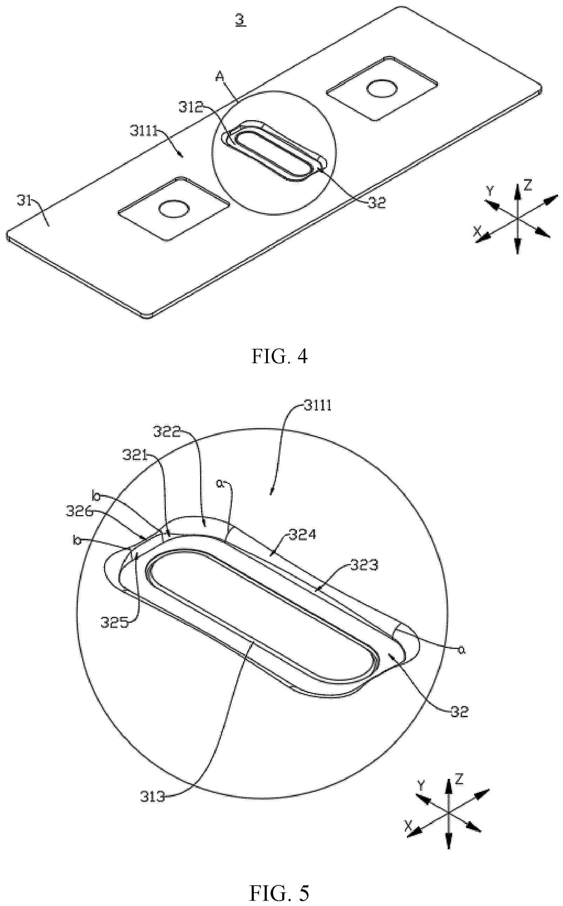

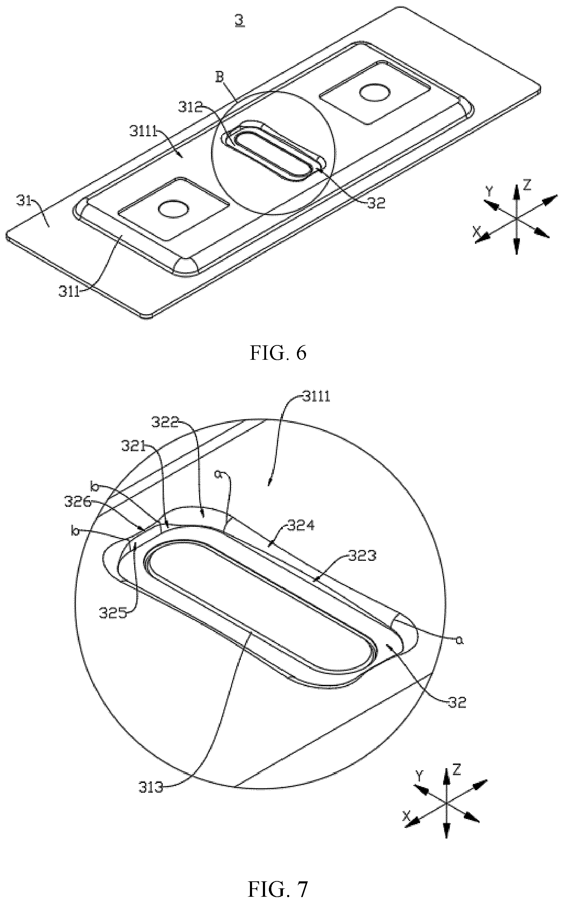

Referring to FIG. 4 to FIG. 7, FIG. 4 is a schematic structural diagram of an end cap 3 according to some embodiments of this application; FIG. 5 is a close-up view of a position A on the end cap 3 shown in FIG. 4; FIG. 6 is a schematic structural diagram of an end cap 3 according to some other embodiments of this application; and FIG 7 is a close-up view of a position B on the end cap 3 shown in FIG. 6. An embodiment of this application provides an end cap 3, including a cap body 31 and a groove 32. The cap body 31 contains a first surface 3111. The groove 32 is created on the cap body 31 to form a pressure relief region 312 at a position of the groove 32 on the cap body 31. The groove 32 is recessed from the first surface 3111 along a thickness direction of the cap body 31. Lateral faces of the groove 32 include a corner face 321 located at a corner position of the groove 32. The corner face 321 is connected to the first surface 3111 by a first chamfered face 322.

The cap body 31 is configured to be connected to the housing 1 (shown in FIG. 3) so that the end cap 3 is enabled to seal the opening of the housing 1. The cap body 31 may be fixed to the end cap 3 by welding. As an example, the cap body 31 is a rectangular structure.

The first surface 3111 may be an outermost surface of the cap body 31 in the thickness direction Z. The first surface 3111 is a surface of the cap body 31, the surface being farthest away from the housing 1 in the thickness direction Z. For example, in the embodiment shown in FIG. 4, the cap body 31 is a flat plate structure. The first surface 3111 may be an outer surface of the cap body 31, the outer surface being oriented back from the housing 1 in the thickness direction Z. For another example, in the embodiment shown in FIG. 6, a local part of the cap body 31 protrudes back from the housing 1 along the thickness direction Z to form a boss 311. Accordingly, the first surface 3111 may be an outer surface of the boss 311, and the outer surface is oriented back from the housing 1 in the thickness direction Z of the cap body 31. On a side oriented toward the housing 1, the cap body 31 forms a recessed space at a position corresponding to a protruding portion. The recessed space can accommodate components inside the battery cell 10 such as the current collection component 5 and the tab of the electrode assembly 2, so as to increase the energy density of the battery cell 10. In addition, this structure can also improve bending strength of the cap body 31 and improve the impact resistance of the end cap 3.

The groove 32 may be molded in various manners such as stamping and milling. The cross-section of the groove 32 may be in various shapes such as rectangle, parallelogram, or trapezoid. The cross-section of the groove 32 is perpendicular to the thickness direction Z. As an example, in FIG. 4 to FIG. 7, the groove 32 is a rectangular groove with a roughly rectangular cross-section.

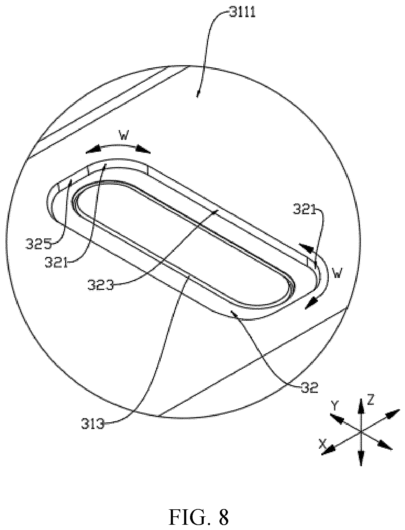

In molding, as shown in FIG. 8, FIG. 8 is a local view of the end cap 3 (without forming a chamfered face) according to some embodiments of this application. The groove 32 may be molded on the first surface 3111 first, and then, as shown in FIG. 7, a first chamfered face 322 is molded, so that the first chamfered face 322 connects the corner face 321 and the first surface 3111.

The lateral faces of the groove 32 are faces on all sides of the groove 32. The lateral faces of the groove are distributed around the opening formed by the groove 32 on the first surface 3111. The lateral faces of the groove 32 and the bottom face of the groove 32 jointly define an internal space of the groove 32. Using an example in which the cross-section of the groove 32 is roughly rectangular, the lateral faces of the groove 32 include four faces located in different orientations. The four faces are located at the four edges of the rectangle. Two adjacent lateral faces are connected to each other by a corner face 321. The corner face 321 corresponds to the corner position of the groove 32. The lateral faces correspond to the edge positions of the groove 32.

The pressure relief region 312 is a part of the cap body 31, the part corresponding to the groove 32. In other words, after the groove 32 is created on the cap body 31, the remaining part of the cap body 31, net of the footprint of the groove 32, is the pressure relief region 312. The pressure relief region 312 is more fragile than the remaining region of the cap body 31. The pressure relief region 312 is a part of the end cap 3, the part being configured to relieve pressure. When the pressure in the battery cell 10 reaches a burst pressure, the pressure relief region 312 can burst open by means of partial rupture, partial or full detachment, or the like, so as to form a channel for outflow of the emissions in the battery cell 10 and achieve the purpose of pressure relief.

The corner face 321 is a part of the lateral faces of the groove, the part being located at a corner position of the groove 32. The corner face 321 may be an arc face. A centerline of the arc face may extend along the thickness direction Z of the cap body 31. Using an example in which the cross-section of the groove 32 is roughly rectangular, the groove 32 includes four lateral faces located in different orientations. Two adjacent lateral faces are connected to each other by a corner face 321, so as to implement a rounded transition between the two adjacent lateral faces through the corner face 321.

The first chamfered face 322 connects the corner face 321 and the first surface 3111 to implement a rounded transition between the corner face 321 and the first surface 3111. The first chamfered face 322 extends along the extension direction W of the corner face. The cross-section of the first chamfered face 322 is arcuate. The cross-section of the first chamfered face 322 is perpendicular to the extension direction W of the corner face. The first chamfered face 322 may be a variable radius structure, which means that the radius of the first chamfered face 322 varies along the extension direction of the first chamfered face 322. Alternatively, the first chamfered face 322 may be a constant radius structure, which means that the radius of the first chamfered face 322 remains constant along the extension direction of the first chamfered face 322. The extension direction of the first chamfered face 322 is identical to the extension direction W of the corner face.

In an embodiment of this application, the corner face 321 is connected to the first surface 3111 by the first chamfered face 322. The first chamfered face 322 reduces the strength of the pressure relief region 312 at the corner position of the groove 32, equalizes the strength of the pressure relief region 312 at the corner and edge positions of the groove 32, reduces the risk of local stress concentration in the pressure relief region 312, well protects the pressure relief region 312, and improves the impact resistance of the end cap 3.

In some embodiments, still referring to FIG. 7, the radius of the first chamfered face 322 increases progressively from both ends to a middle position along a circumferential direction of the groove 32.

The circumferential direction of the groove 32 is the extension direction of the lateral face of the groove 32. The two ends of the first chamfered face 322 in the circumferential direction of the groove 32 are the two ends of the first chamfered face 322 in the extension direction. The extension direction of the first chamfered face 322 is identical to the extension direction W of the corner face. The radii of the first chamfered face 322 at the two ends may be equal or unequal.

Understandably, in this embodiment, the first chamfered face 322 is a variable radius structure. The radius of the first chamfered face 322 increases progressively from both ends to the middle position. Therefore, the thickness of the cap body 31 at the middle position of the first chamfered face 322 is smaller, and the thickness at the two ends of the first chamfered face 322 is larger. The thickness of the cap body 31 at the position of the first chamfered face 322 decreases progressively from both ends to the middle position of the first chamfered face 322, so that the strength of the pressure relief region 312 at the corner position of the groove 32 increases progressively from the middle to both ends of the first chamfered face 322.

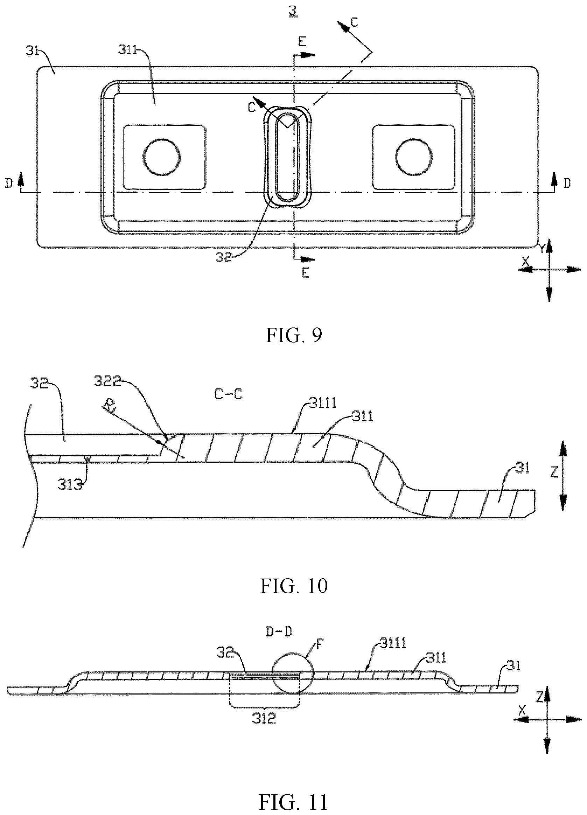

In some embodiments, referring to FIG. 9 and FIG. 10, FIG. 9 is a top view of the end cap 3 shown in FIG. 6; and FIG. 10 is a cross-sectional view of the end cap 3 shown in FIG. 9 sectioned along a C-C line. A maximum radius of the first chamfered face 322 is R₁, satisfying: 0.5 mm ≤ R₁ ≤ 2 mm.

R₁ may be any one of 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, or a value falling within a range formed by any two thereof.

In an embodiment in which the first chamfered face 322 is a constant radius structure, the radius of the first chamfered face 322 at any position in the extension direction thereof is R₁. In an embodiment in which the first chamfered face 322 is a variable radius structure, in a case that, for example, the radius of the first chamfered face 322 increases progressively from both ends to the middle position, the radius of the first chamfered face 322 in the middle position is R₁.

In some embodiments, still referring to FIG. 7, the lateral faces of the groove further include a first lateral face 323 connected to the corner face 321. The first lateral face 323 is connected to the first surface 3111 by a second chamfered face 324. A maximum radius of the second chamfered face 324 is less than a maximum radius of the first chamfered face 322.

The first lateral face 323 is one of the lateral faces of the groove. Using an example in which the groove 32 is rectangular in cross-section, the first lateral face 323 is a flat face. The first lateral face 323 may be one of the lateral faces of the groove that extend along the length direction, or may be one of the lateral faces of the groove that extend along the width direction.

The second chamfered face 324 connects the first lateral face 323 and the first surface 3111 to implement a rounded transition between the first lateral face 323 and the first surface 3111. The second chamfered face 324 extends along the extension direction of the first lateral face 323. The cross-section of the second chamfered face 324 is arcuate. The cross-section of the second chamfered face 324 is perpendicular to the extension direction of the first lateral face 323. The second chamfered face 324 may be a variable radius structure, which means that the radius of the second chamfered face 324 varies along the extension direction of the second chamfered face 324. Alternatively, the second chamfered face 324 may be a constant radius structure, which means that the radius of the second chamfered face 324 remains constant along the extension direction of the second chamfered face 324. In an embodiment in which the second chamfered face 324 is a constant radius structure, the radius of the second chamfered face 324 at any position in the extension direction thereof is equal to the maximum radius of the second chamfered face 324.

In this embodiment, the second chamfered face 324 enables the first lateral face 323 to transition to the first surface 3111 in a more rounded manner, thereby avoiding formation of a sharp corner caused by direct connection between the first lateral face 323 and the first surface 3111. With the maximum radius of the second chamfered face 324 being less than the maximum radius of the first chamfered face 322, the strength of the pressure relief region 312 is equalized at the corner and edge positions of the groove 32.

In some embodiments, still referring to FIG. 7, along the circumferential direction of the groove 32, each of two ends of the second chamfered face 324 is connected to a first chamfered face 322. The radius of the second chamfered face 324 decreases progressively from both ends to the middle position.

The two ends of the second chamfered face 324 in the circumferential direction of the groove 32 are the two ends of the second chamfered face 324 in the extension direction. The extension direction of the second chamfered face 324 is identical to the extension direction of the first lateral face 323. The radii of the second chamfered face 324 at the two ends may be equal or unequal. As an example, in FIG. 7, the radii of the second chamfered face 324 at the two ends are equal.

In the case that the radius of the first chamfered face 322 increases progressively from both ends to the middle position and the maximum radius of the second chamfered face 324 is less than the maximum radius of the first chamfered face 322, understandably, the radii of the second chamfered face 324 at the two ends are less than the radius of the first chamfered face 322 at the middle position.

In this embodiment, the second chamfered face 324 is a variable radius structure. The radius of the second chamfered face 324 decreases progressively from both ends to the middle position. Therefore, the thickness of the cap body 31 at the middle position of the second chamfered face 324 is larger, and the thickness at the two ends of the second chamfered face 324 is smaller. The thickness of the cap body 31 at the position of the second chamfered face 324 increases progressively from both ends to the middle position of the second chamfered face 324, so that the strength of the pressure relief region 312 at the edge position of the groove 32 increases progressively from both ends to the middle of the second chamfered face 324, thereby increasing the strength of the pressure relief region 312 at the middle position of the edge of the groove 32, and achieving a higher impact resistance.

In some embodiments, still referring to FIG. 7, the first chamfered face 322 is connected to the second chamfered face 324 at a first connection position a. The radius of the first chamfered face 322 at the first connection position a is equal to the radius of the second chamfered face 324 at the first connection position a.

The first connection position a is a position at which the first chamfered face 322 is connected to the second chamfered face 324. In an embodiment in which each of two ends of the second chamfered face 324 is connected to a first chamfered face 322, two first connection positions a are formed at the two ends of the second chamfered face 324 correspondingly.

In this embodiment, the radius of the first chamfered face 322 at the first connection position a is equal to the radius of the second chamfered face 324 at the first connection position a, thereby enabling the first chamfered face 322 to transition to the second chamfered face 324 more smoothly, and enabling the first chamfered face 322 and the second chamfered face 324 to form a continuous chamfered face.

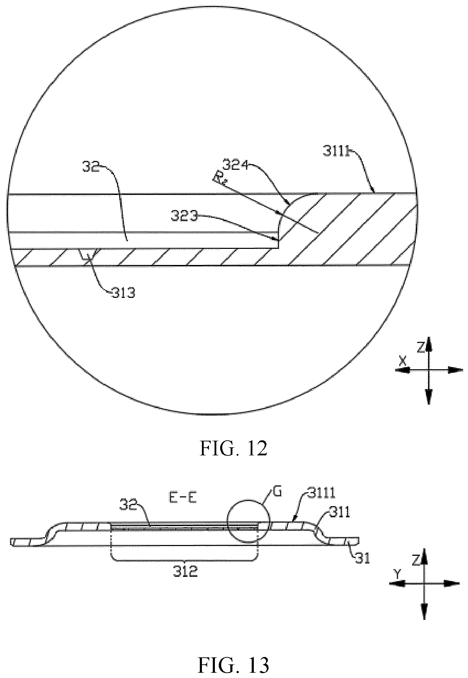

In some embodiments, referring to FIG. 11 and FIG. 12, FIG. 11 is a cross-sectional view of the end cap 3 shown in FIG. 9 sectioned along a D-D line; and FIG. 12 is a close-up view of a position F on the end cap 3 shown in FIG. 11. The maximum radius of the second chamfered face 324 is R₂, satisfying: 0.1 mm ≤ R₂ ≤ 0.5 mm.

R₂ may be any one of 0.1 mm, 0.15 mm, 0.2 mm, 0.25 mm, 0.3 mm, 0.35 mm, 0.4 mm, 0.45 mm, 0.5 mm, or a value falling within a range formed by any two thereof.

In an embodiment in which the second chamfered face 324 is a constant radius structure, the radius of the second chamfered face 324 at any position in the extension direction thereof is R₂. In an embodiment in which the second chamfered face 324 is a variable radius structure, in a case that, for example, the radius of the second chamfered face 324 decreases progressively from both ends to the middle position, the radius of at least one of the two ends of the second chamfered face 324 is R₂.

In some embodiments, still referring to FIG. 7, the lateral faces of the groove further include a second lateral face 325. The second lateral face 325 and the first lateral face 323 are located in different orientations of the groove 32. The second lateral face 325 is connected to the first lateral face 323 by the corner face 321. The second lateral face 325 is connected to the first surface 3111 by a third chamfered face 326. The maximum radius of the third chamfered face 326 is less than the maximum radius of the first chamfered face 322.

The second lateral face 325 is one of the lateral faces of the groove. Using an example in which the groove 32 is rectangular, the second lateral face 325 is a flat face. The second lateral face 325 may be one of the lateral faces of the groove that extend along the length direction, or may be one of the lateral faces of the groove that extend along the width direction.

The third chamfered face 326 connects the second lateral face 325 and the first surface 3111 to implement a rounded transition between the second lateral face 325 and the first surface 3111. The third chamfered face 326 extends along the extension direction of the second lateral face 325. The cross-section of the third chamfered face 326 is arcuate. The cross-section of the third chamfered face 326 is perpendicular to the extension direction of the second lateral face 325. The third chamfered face 326 may be a variable radius structure, which means that the radius of the third chamfered face 326 varies along the extension direction of the third chamfered face 326. Alternatively, the third chamfered face 326 may be a constant radius structure, which means that the radius of the third chamfered face 326 remains constant along the extension direction of the third chamfered face 326. In an embodiment in which the third chamfered face 326 is a constant radius structure, the radius of the third chamfered face 326 at any position in the extension direction thereof is equal to the maximum radius of the third chamfered face 326.

In this embodiment, the third chamfered face 326 enables the second lateral face 325 to transition to the first surface 3111 in a more rounded manner, thereby avoiding formation of a sharp corner caused by direct connection between the second lateral face 325 and the first surface 3111. With the maximum radius of the third chamfered face 326 being less than the maximum radius of the first chamfered face 322, the strength of the pressure relief region 312 is equalized at the corner and edge positions of the groove 32.

In some embodiments, still referring to FIG. 7, along the circumferential direction of the groove 32, each of two ends of the third chamfered face 326 is connected to a first chamfered face 322. The radius of the third chamfered face 326 decreases progressively from both ends to the middle position.

The two ends of the third chamfered face 326 in the circumferential direction of the groove 32 are the two ends of the third chamfered face 326 in the extension direction. The extension direction of the third chamfered face 326 is identical to the extension direction of the second lateral face 325. The radii of the third chamfered face 326 at the two ends may be equal or unequal. As an example, in FIG. 7, the radii of the third chamfered face 326 at the two ends are equal.

In the case that the radius of the first chamfered face 322 increases progressively from both ends to the middle position and the maximum radius of the third chamfered face 326 is less than the maximum radius of the first chamfered face 322, understandably, the radii of the third chamfered face 326 at the two ends are less than the radius of the first chamfered face 322 at the middle position.

Understandably, in this embodiment, the third chamfered face 326 is a variable radius structure. The radius of the third chamfered face 326 decreases progressively from both ends to the middle position. Therefore, the thickness of the cap body 31 at the middle position of the third chamfered face 326 is larger, and the thickness at the two ends of the third chamfered face 326 is smaller. The thickness of the cap body 31 at the position of the third chamfered face 326 increases progressively from both ends to the middle position of the third chamfered face 326, so that the strength of the pressure relief region 312 at the edge position of the groove 32 increases progressively from both ends to the middle of the third chamfered face 326, thereby increasing the strength of the pressure relief region 312 at the middle position of the edge of the groove 32, and achieving a higher impact resistance.

In some embodiments, still referring to FIG. 7, the first chamfered face 322 is connected to the third chamfered face 326 at a second connection position b. The radius of the first chamfered face 322 at the second connection position b is equal to the radius of the third chamfered face 326 at the second connection position b.

The second connection position b is a position at which the first chamfered face 322 is connected to the third chamfered face 326. In an embodiment in which each of two ends of the third chamfered face 326 is connected to a first chamfered face 322, two second connection positions b are formed at the two ends of the third chamfered face 326 correspondingly.

In this embodiment, the radius of the first chamfered face 322 at the second connection position b is equal to the radius of the third chamfered face 326 at the second connection position b, thereby enabling the first chamfered face 322 to transition to the third chamfered face 326 more smoothly, and enabling the first chamfered face 322 and the third chamfered face 326 to form a continuous chamfered face.

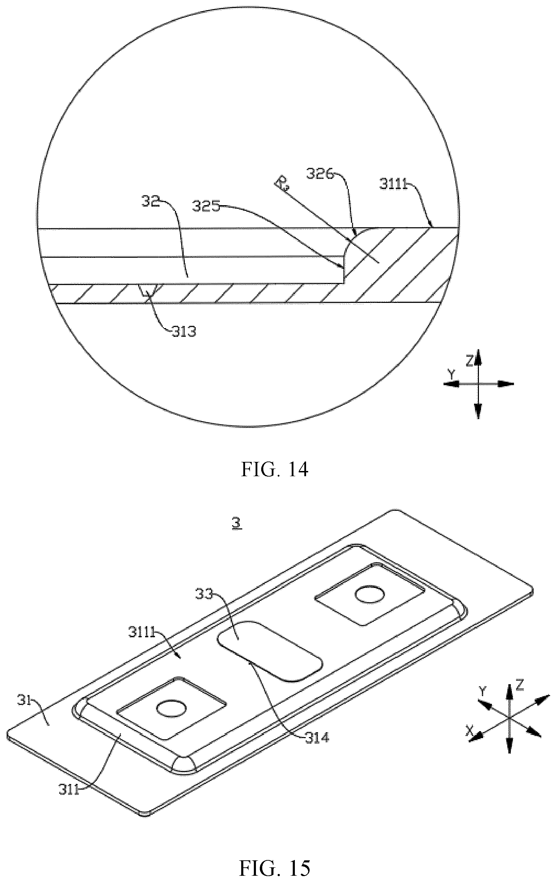

In some embodiments, referring to FIG. 13 and FIG. 14, FIG. 13 is a cross-sectional view of the end cap 3 shown in FIG. 9 sectioned along an E-E line; and FIG. 14 is a close-up view of a position G on the end cap 3 shown in FIG. 13. The maximum radius of the third chamfered face 326 is R₃, satisfying: 0.1 mm ≤ R₃ ≤ 0.5 mm.

R₃ may be any one of 0.1 mm, 0.15 mm, 0.2 mm, 0.25 mm, 0.3 mm, 0.35 mm, 0.4 mm, 0.45 mm, 0.5 mm, or a value falling within a range formed by any two thereof.

In an embodiment in which the third chamfered face 326 is a constant radius structure, the radius of the third chamfered face 326 at any position in the extension direction thereof is R₃. In an embodiment in which the third chamfered face 326 is a variable radius structure, in a case that, for example, the radius of the third chamfered face 326 decreases progressively from both ends to the middle position, the radius of at least one of the two ends of the third chamfered face 326 is R₃.

In some embodiments, still referring to FIG. 7, the lateral faces of the groove include two first lateral faces 323 and two second lateral faces 325. The two first lateral faces 323 are disposed opposite to each other along a first direction X. The two second lateral faces 325 are disposed opposite to each other along a second direction Y The first direction X is perpendicular to the second direction Y

Both the first direction X and the second direction Y are perpendicular to the thickness direction Z of the cap body 31.

Both first lateral faces 323 are flat faces and parallel to each other. Both second lateral faces 325 are flat faces and parallel to each other.

In this embodiment, the lateral faces of the groove are roughly rectangular, and therefore, the cross-section of the groove 32 is also roughly rectangular. The groove is simple in structure and easy to mold.

In some embodiments, still referring to FIG. 7, a distance between the two first lateral faces 323 along the first direction X is a first distance. A distance between the two second lateral faces 325 along the second direction Y is a second distance. The first distance is less than the second distance.

The groove 32 is roughly rectangular. The first lateral face 323 extends along the length direction of the groove 32, and the second lateral face 325 extends along the width direction of the groove 32. Understandably, the first direction X is the width direction of the groove 32, and the second direction Y is the length direction of the groove 32. The first distance is the width of the groove 32, and the second distance is the length of the groove 32.

As an example, a dimension of the first lateral face 323 in the length direction of the groove 32 is greater than a dimension of the second lateral face 325 in the width direction of the groove 32. A dimension of the second chamfered face 324 in the length direction of the groove 32 is greater than a dimension of the third chamfered face 326 in the width direction of the groove 32.

As shown in FIG. 7, in an embodiment, the radius of the first chamfered face 322 increases progressively from both ends to the middle position, the radius of the second chamfered face 324 decreases progressively from both ends to the middle position, and the radius of the third chamfered face 326 decreases progressively from both ends to the middle position. In this case, the radius of the first chamfered face 322 at an end connected to the second chamfered face 324 may be greater than the radius of the first chamfered face 322 at an end connected to the third chamfered face 326.

In this embodiment, the groove 32 is roughly rectangular, and the pressure relief region 312 is also roughly rectangular, thereby providing a relatively large pressure relief area.

In some embodiments, the first direction X is the length direction of the cap body 31, and the second direction Y is the width direction of the cap body 31.

As an example, the cap body 31 is rectangular, the width direction of the groove 32 is identical to the length direction of the cap body 31, and the length direction of the groove 32 is identical to the width direction of the cap body 31.

Because the width direction of the groove 32 is identical to the length direction of the cap body 31 and the length direction of the groove 32 is identical to the width direction of the cap body 31, when an inner side of the end cap 3 undergoes a pressure from inside the battery cell 10, the pressure relief region 312 is more prone to be broken at a short-edge position of the groove 32. When the outer side of the end cap 3 undergoes an impact force, the pressure relief region 312 is more prone to be broken at a long-edge position of the groove 32, thereby varying the positions prone to break in the pressure relief region 312 under two types of different working conditions, increasing the impact resistance of the end cap 3, and improving the service life of the battery cell 10.

In some embodiments, still referring to FIG. 7, a pressure relief nick 313 is created on the cap body 31. The pressure relief nick 313 is located in the pressure relief region 312.

The pressure relief nick 313 may be located on the bottom face of the groove 32. The pressure relief nick 313 may be molded in various manners such as stamping and milling.

The region at which the pressure relief nick 313 is located on the cap body 31 is more fragile. In this way, when the pressure in the battery cell 10 reaches a burst pressure, the pressure relief region 312 bursts open at the position of the pressure relief nick 313, so as to relieve pressure from the pressure relief region 312.

In some embodiments, still referring to FIG. 7, the pressure relief nick 313 is a groove extending along a closed track with a start point connected to an ending point.

The closed track may be in various shapes such as circle, oval, or rectangle. As an example, in FIG. 7, the closed track is roughly rectangular. The region defined by the pressure relief nick 313 is also roughly rectangular. The length direction of the region defined by the pressure relief nick 313 is identical to the length direction of the groove 32.

As an example, the area of the region defined by the pressure relief nick 313 is at least one-half of the area of the pressure relief region 312.

In this embodiment, the pressure relief nick 313 is a groove extending along a closed track with a start point connected to an ending point. When the pressure inside the battery cell 10 reaches a burst pressure, the pressure relief region 312 can burst open in the region defined by the pressure relief nick 313, so as to form a corresponding opening portion. The emissions inside the battery cell 10 can be expelled out through the opening portion. In this way, a relatively large pressure relief area is provided, and the pressure relief efficiency is improved.

In some other embodiments, the pressure relief nick 313 may be a groove extending along a non-closed track. For example, the pressure relief nick 313 is rectilinear, U-shaped, C-shaped, or the like.

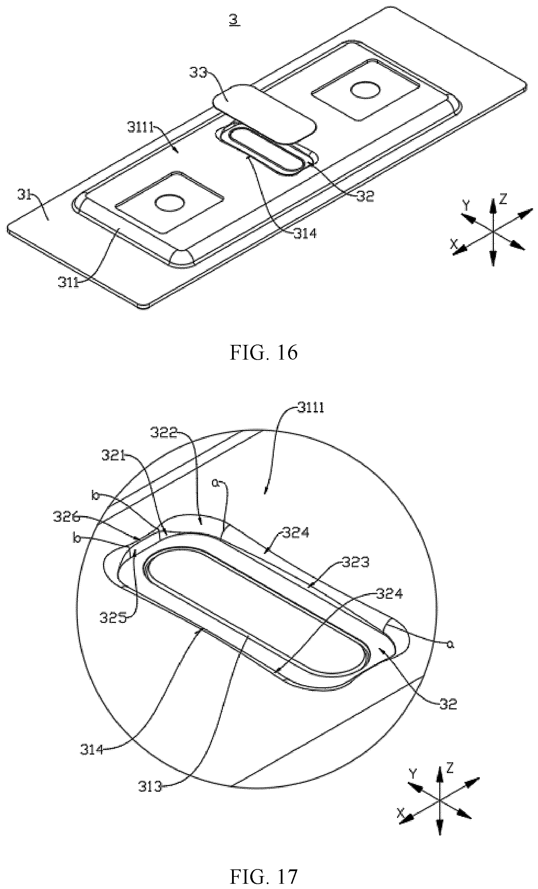

In some embodiments, referring to FIG. 15 and FIG. 16, FIG. 15 is a schematic structural diagram of an end cap 3 according to some other embodiments of this application; and FIG. 16 is an exploded view of the end cap 3 shown in FIG. 15. The end cap 3 further includes a protection piece 33. The protection piece 33 is connected to the cap body 31 and covers the groove 32.

The protection piece 33 may be a sheet structure. The shape of the protection piece 33 may fit the shape of the groove 32. For example, if the groove 32 is rectangular, the protection piece 33 is also rectangular. The protection piece 33 may be made of a metal material such as copper, iron, aluminum, steel, or aluminum alloy. Alternatively, the protection piece 33 may be a non-metal material such as rubber or plastic. The protection piece 33 may be connected to the cap body 31 in various ways such as snap-fastening and bonding.

In this embodiment, the protection piece 33 covers the groove 32. The protection piece 33 protects the pressure relief region 312, and reduces the risk of damage to the pressure relief region 312 caused by a foreign object.

In some embodiments, still referring to FIG. 15 and FIG. 16, the protection piece 33 is connected to the first surface 3111. As an example, the protection piece 33 is bonded to the first surface 3111.

In an embodiment in which a first chamfered face 322, a second chamfered face 324, and a third chamfered face 326 are formed on the cap body 31, the protection piece 33 fully covers the first chamfered face 322, the second chamfered face 324, and the third chamfered face 326.

In this embodiment, the protection piece 33 is connected to the first surface 3111. With this structure, on the one hand, it is more convenient to mount the protection piece 33. On the other hand, the protection piece 33 can cover each chamfered face, thereby being more protective for the pressure relief region 312.

In some embodiments, still referring to FIG. 15 and FIG. 16, an exhaust passage 314 is created on the cap body 31. The exhaust passage 314 communicates an interior of the groove 32 to an exterior of the cap body 31.

The exhaust passage 314 may be an aperture provided in the cap body 31. One end of the aperture may extend to a lateral face of the groove 32, and the other end of the aperture may extend to the first surface 3111. Alternatively, the exhaust passage 314 may be a slot provided in the cap body 31. There may be one or more exhaust passages 314 on the cap body 31.

The exhaust passage 314 implements communication between the interior of the groove 32 and the outside, so as to equalize the air pressure between the interior of the groove 32 and the outside, and reduce the risk of detachment of the protection piece 33 caused by an increased air pressure inside the groove 32.

In some embodiments, referring to FIG. 17, FIG. 17 is a close-up view of the end cap 3 shown in FIG. 15 stripped of the protection piece 33. The exhaust passage 314 is an exhaust slot created on the cap body 31. One end of the exhaust slot extends to the first surface 3111.

The exhaust slot may be located at an edge position of the groove 32. For example, the exhaust slot is arranged corresponding to the first lateral face 323 or the second lateral face 325 of the groove 32. Alternatively, the exhaust slot may be located at a corner position of the groove 32. For example, the exhaust slot is arranged corresponding to the corner face 321 of the groove 32.

As an example, in FIG. 17, the exhaust slot is arranged corresponding to the first lateral face 323, and the exhaust slot extends to the second chamfered face 324.

In this embodiment, the exhaust passage 314 is an exhaust slot provided on the cap body 31. The exhaust passage 314 can effectively communicate the interior of the groove 32 to the outside, and is easy to mold.

An embodiment of this application provides a battery cell 10, including a housing 1 and the end cap 3 provided in any one of the embodiments described above. An opening is created on the housing 1, and the cap body 31 seals the opening.

An embodiment of this application provides a battery 100, including the battery cell 10 provided in any one of the embodiments described above.

In some embodiments, the battery 100 further includes a box 20. The battery cell 10 is accommodated in the box 20. The box 20 includes a bottom wall. The end cap 3 is disposed on a side of the battery cell 10, the side being opposite to the bottom wall.

The bottom wall is a wall of the box 20, and the wall is located at the bottom when being in conventional use. Using an example in which the box 20 includes a first part 201 and a second part 202, when being in conventional use, the second part 202 fits and covers the top of the first part 201, and a wall of the first part 201, which is oriented back from the second part 202, is the bottom wall.

The end cap 3 is disposed on a side of the battery cell 10, the side being opposite to the bottom wall so that the battery cell 10 is in an inverted state.

An embodiment of this application further provides an electrical device, including the battery 100 provided in any one of the embodiments described above.

It is hereby noted that to the extent that no conflict occurs, the embodiments of this application and the features in the embodiments may be combined with each other.

The foregoing embodiments are just intended to describe the technical solutions of this application, but not to limit this application. To a person skilled in the art, various modifications and variations may be made to this application. Any and all modifications, equivalent replacements, improvements, and the like made without departing from the spirit and principles of this application still fall within the protection scope of this application.

## Claims

1. An end cap, comprising:
a cap body, containing a first surface; and
a groove, created on the cap body to form a pressure relief region at a position of the groove on the cap body, wherein the groove is recessed from the first surface along a thickness direction of the cap body, and lateral faces of the groove comprise a corner face located at a corner position of the groove, wherein
the corner face is connected to the first surface by a first chamfered face.

2. The end cap according to claim 1, wherein a radius of the first chamfered face increases progressively from both ends to a middle position along a circumferential direction of the groove.

3. The end cap according to claim 1 or 2, wherein a maximum radius of the first chamfered face is R₁, satisfying: 0.5 mm ≤ R₁ ≤ 2 mm.

4. The end cap according to any one of claims 1 to 3, wherein the lateral faces of the groove further comprise a first lateral face connected to the corner face, and the first lateral face is connected to the first surface by a second chamfered face; and
a maximum radius of the second chamfered face is less than a maximum radius of the first chamfered face.

5. The end cap according to claim 4, wherein, along a circumferential direction of the groove, each of two ends of the second chamfered face is connected to a first chamfered face, and a radius of the second chamfered face decreases progressively from both ends to a middle position.

6. The end cap according to claim 4 or 5, wherein the first chamfered face is connected to the second chamfered face at a first connection position, and the radius of the first chamfered face at the first connection position is equal to a radius of the second chamfered face at the first connection position.

7. The end cap according to any one of claims 4 to 6, wherein the maximum radius of the second chamfered face is R₂, satisfying: 0.1 mm ≤ R₂ ≤ 0.5 mm.

8. The end cap according to any one of claims 4 to 7, wherein the lateral faces of the groove further comprise a second lateral face, the second lateral face and the first lateral face are located in different orientations of the groove, the second lateral face is connected to the first lateral face by the corner face, and the second lateral face is connected to the first surface by a third chamfered face; and
a maximum radius of the third chamfered face is less than the maximum radius of the first chamfered face.

9. The end cap according to claim 8, wherein, along a circumferential direction of the groove, each of two ends of the third chamfered face is connected to a first chamfered face, and a radius of the third chamfered face decreases progressively from both ends to a middle position.

10. The end cap according to claim 8 or 9, wherein the first chamfered face is connected to the third chamfered face at a second connection position, and the radius of the first chamfered face at the second connection position is equal to a radius of the third chamfered face at the second connection position.

11. The end cap according to any one of claims 8 to 10, wherein the maximum radius of the third chamfered face is R₃, satisfying: 0.1 mm ≤ R₃ ≤ 0.5 mm.

12. The end cap according to any one of claims 8 to 11, wherein the lateral faces of the groove comprise two first lateral faces and two second lateral faces, the two first lateral faces are disposed opposite to each other along a first direction, the two second lateral faces are disposed opposite to each other along a second direction, and the first direction is perpendicular to the second direction.

13. The end cap according to claim 12, wherein a distance between the two first lateral faces along the first direction is a first distance, a distance between the two second lateral faces along the second direction is a second distance, and the first distance is less than the second distance.

14. The end cap according to claim 13, wherein the first direction is a length direction of the cap body, and the second direction is a width direction of the cap body.

15. The end cap according to any one of claims 1 to 14, wherein a pressure relief nick is created on the cap body, and the pressure relief nick is located in the pressure relief region.

16. The end cap according to claim 15, wherein the pressure relief nick is a groove extending along a closed track with a start point connected to an ending point.

17. The end cap according to any one of claims 1 to 16, wherein the end cap further comprises a protection piece, and the protection piece is connected to the cap body and covers the groove.

18. The end cap according to claim 17, wherein the protection piece is connected to the first surface.

19. The end cap according to claim 17 or 18, wherein an exhaust passage is created on the cap body, and the exhaust passage communicates an interior of the groove to an exterior of the cap body.

20. The end cap according to claim 19, wherein the exhaust passage is an exhaust slot created on the cap body, and one end of the exhaust slot extends to the first surface.

21. A battery cell, comprising:
a housing, on which an opening is created;
the end cap according to any one of claims 1 to 20, wherein the cap body seals the opening.

22. A battery, comprising:
the battery cell according to claim 21.

23. The battery according to claim 22, wherein the battery further comprises a box, the battery cell is accommodated in the box, the box comprises a bottom wall, and the end cap is disposed on a side of the battery cell, the side being opposite to the bottom wall.

24. An electrical device, comprising the battery according to claim 22 or 23.
